# EUROPEAN PATENT APPLICATION

(11) **EP 4 366 415 A1**
(43) Date of publication of application: **08.05.2024**
(21) Application number: 21947537.3
(22) Date of filing: 30.06.2021
(51) Int. Cl.: H04W 72/04, H04W 74/08

(54) **DATA TRANSMISSION METHOD AND APPARATUS, AND DEVICE**

(71) Applicant: Beijing Xiaomi Mobile Software Co., Ltd., Beijing 100085 (CN)
(72) Inventor: TAO, Xuhua, Beijing 100085 (CN)
(74) Representative: Gunzelmann, Rainer
(86) International application number: PCT/CN2021/103547
(87) International publication number: WO 2023/272583

(57) **Abstract**

Provided in the present disclosure are a data transmission method and apparatus, and a device. The data transmission method can be applied to a communication system, for example, a new radio (NR) system. The method may comprise: a terminal device determining the position of a non-anchor carrier of a serving cell on a frequency band, wherein the serving cell is configured with an anchor carrier and the non-anchor carrier; and the terminal device performing data transmission on the non-anchor carrier. In the present disclosure, a network device configures a plurality of carriers for a serving cell of a terminal device, so as to improve the capacity of the serving cell.

## Description

### TECHNICAL FIELD

The disclosure relates to a field of wireless communication technologies, in particular to a data transmission method, an apparatus and a device.

### BACKGROUND

With the continuous development of wireless communication technologies, new radio (NR) technology has emerged after long term evolution (LTE) technology.

In a NR system, a serving cell of a terminal is usually a single-carrier cell, i.e., the serving cell only supports a single carrier. However, in the face of an explosive growth in a demand for service volume, the number of terminals, and types of terminals in a future network, a capacity of the single-carrier serving cell may be unable to meet the demands.

Therefore, how to improve the capacity of the serving cell is a problem to be solved urgently.

### SUMMARY

The disclosure provides a data transmission method, an apparatus and a device, to realize configuration of a serving cell with multiple carriers in the NR system, thereby improving a capacity of the serving cell.

In a first aspect, the disclosure provides a data transmission method, performed by a terminal in a communication system. The communication system may be a NR system. The method includes: determining, by the terminal, a location of a non-anchor carrier of a serving cell in a frequency band, in which the serving cell is configured with an anchor carrier and the non-anchor carrier; and performing data transmission on the non-anchor carrier by the terminal.

In a second aspect, the disclosure provides a data transmission method, performed by a network device in a communication system. The communication system may be a NR system. The method includes: indicating, by the network device, a location of a non-anchor carrier of a serving cell of a terminal in a frequency band, in which the serving cell is configured with an anchor carrier and the non-anchor carrier; and performing, by the network device, data transmission on the non-anchor carrier.

In a third aspect, the disclosure provides a communication apparatus. The communication apparatus may be a terminal in a communication system, a chip or a chip system in the terminal, or a functional module in the terminal for realizing the method described in each of the above embodiments. The communication apparatus has an ability to implement the functions performed by the terminal in each of the above embodiments. These functions can be realized by using hardware to execute corresponding software. The hardware or software includes one or more modules corresponding to the functions described above. The communication apparatus includes: a determining module, configured to determine a location of a non-anchor carrier of a serving cell in a frequency band, in which the serving cell is configured with an anchor carrier and the non-anchor carrier; and a first transmitting module, configured to perform data transmission on the non-anchor carrier.

In a fourth aspect, the disclosure provide a communication apparatus. The communication apparatus may be a network device in a communication system, a chip or a chip system in the network device, or a functional module in the network device for realizing the method described in each of the above embodiments. The apparatus has an ability to implement the functions performed by the network device in each of the above embodiments. These functions can be realized by using hardware to execute corresponding software. The hardware or software includes one or more modules corresponding to the functions described above. The communication apparatus includes: an indicating module, configured to indicate a location of a non-anchor carrier of a serving cell of a terminal in a frequency band, in which the serving cell is configured with an anchor carrier and the non-anchor carrier; and a second transmitting module, configured to perform data transmission on the non-anchor carrier.

In a fifth aspect, the disclosure provides a communication device. The communication device includes: an antenna, a memory, and a processor connected to the antenna and the memory, respectively. The processor is configured to control transmitting and receiving of the antenna by executing computer-executable instructions stored on the memory and capable of performing the data transmission method of any one of the first aspect, the second aspect, and possible implementations thereof.

In a sixth aspect, the disclosure provides a computer storage medium, a processing module, for storing computer-executable instructions. When the computer-executable instructions are executed by a processor, the data transmission method of any one of the first aspect, the second aspect, and possible implementations thereof can be performed.

In the disclosure, the network device configures a plurality of carriers for the serving cell of the terminal, to increase a capacity of the serving cell. If the anchor carrier is a frequency range 1 (FR1) carrier and the non-anchor carrier is a frequency range 2 (FR2) carrier, the terminal can reside in the FR1 carrier when the terminal is in an idle state, and the terminal initiates random access to the FR2 carrier when a service arrives and returns to the FR2 carrier for data transmission. In this way, power consumption is reduced and resources are saved.

It should be understood that the third to sixth aspects of the disclosure are consistent with the technical solutions of the first to second aspects of the disclosure, and beneficial effects achieved by each aspect and corresponding feasible implementations are similar and will not be repeated.

### BRIEF DESCRIPTION OF THE DRAWINGS

FIG. 1 is a schematic diagram of a communication system according to an embodiment of the disclosure.
FIG. 2 is a flowchart of implementing a first data transmission method according to an embodiment of the disclosure.
FIG. 3 is a schematic diagram of an anchor carrier and non-anchor carriers according to an embodiment of the disclosure.
FIG. 4 is a flowchart of implementing a second data transmission method according to an embodiment of the disclosure.
FIG. 5 is a flowchart of implementing a third data transmission method according to an embodiment of the disclosure.
FIG. 6 is a flowchart of implementing a fourth data transmission method according to an embodiment of the disclosure.
FIG. 7 is a block diagram of a communication apparatus according to an embodiment of the disclosure.
FIG. 8 is a block diagram of another communication apparatus according to an embodiment of the disclosure.
FIG. 9 is a schematic diagram of a communication device according to an embodiment of the disclosure.
FIG. 10 is a schematic diagram of a terminal according to an embodiment of the disclosure.
FIG. 11 is a schematic diagram of a network device according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the disclosure. Instead, they are merely examples of apparatuses and methods consistent with aspects related to the embodiments of the disclosure, and as recited in detail in the appended claims.

The terms used in the embodiments of the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

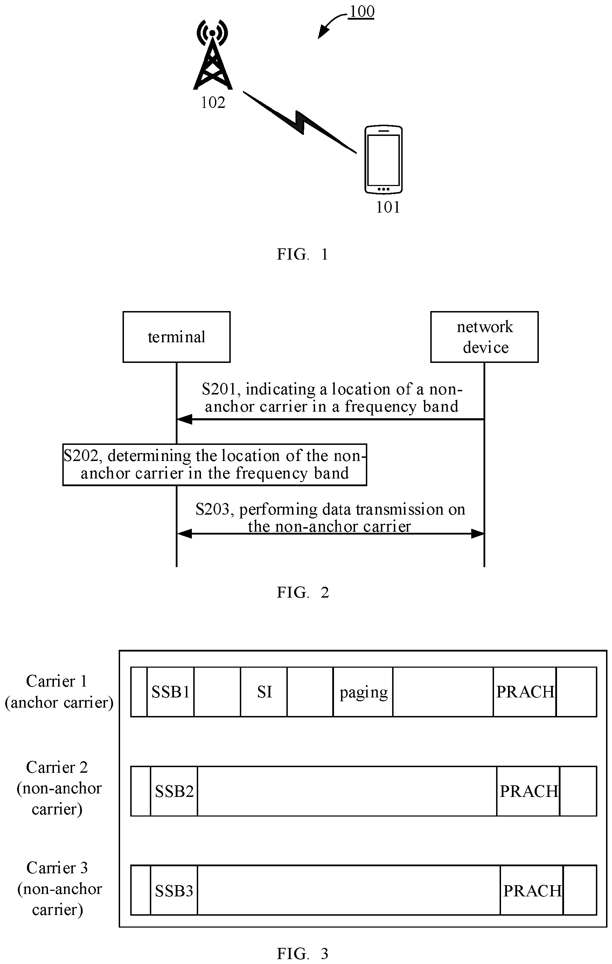

The embodiments of the disclosure provide a communication system. The communication system may be a 5^{th} generation (5G) communication system, such as a NR system. FIG. 1 is a schematic diagram of a communication system according to an embodiment of the disclosure. As illustrated in FIG. 1, the communication system 100 may include: a terminal 101 and a network device 102.

In some possible embodiments, the communication system 100 may support operating in non-standalone (NSA) and/or standalone (SA). The terminal 101 may support the NSA and/or the SA, and the network device 102 may support the NSA and/or the SA.

For example, the terminal 101 may be a device that provides voice and/or data connectivity to a user. In some embodiments, the terminal may also be referred to as a user equipment (UE), a mobile station, a subscriber unit, a station, or a terminal equipment (TE), etc. The terminal can be a cellular phone, a personal digital assistant (PDA), a modem, a handheld device, a laptop computer, a cordless phone, a wireless local loop (WLL) station or a pad. With the development of wireless communication technologies, the terminal in the embodiments of the disclosure may be a device that can access a wireless communication system, or communicate with a network side of the wireless communication system, or communicate with other devices through the wireless communication system. For example, the terminal may be a terminal and a vehicle in smart transportation, a household device in smart home, an electric power meter reading device, a voltage monitoring device, or an environment monitoring device in a smart power grid, a video monitoring device or a cash register in a smart security network. In the embodiment of the disclosure, the terminal may communicate with the network device, and multiple terminals may communicate with each other. The terminal may be statically fixed or movable.

The network device 102 may be a device on an access network side for supporting the terminal to access to the wireless communication system. For example, it may be an evolved NodeB (eNB) in a 4G access technology communication system, a next generation NodeB (gNB) of a 5G access technology communication system, a transmission reception point (TRP), a relay node, an access point (AP), and the like.

In the above communication system, a serving cell of the terminal is usually a single-carrier serving cell, i.e., the serving cell only supports a single carrier. However, in the face of an explosive growth in a demand for service volume, the number of terminals, and the types of terminals in a future network, a capacity of the single-carrier serving cell may be unable to meet the demands. Therefore, how to improve the capacity of the serving cell is a problem to be solved urgently.

Frequency ranges supported by the communication system are defined as frequency range 1 (FR1) and frequency range 2 (FR2). FR1 is commonly referred to as the 5G Sub-6GHz frequency band (450MHz to 6000MHz), and FR2 is 5G millimeter wave frequency band (24250MHz to 52600MHz). For a terminal whose serving cell is an FR2 cell, the terminal still needs to reside in the FR2 cell when the terminal is in an idle state, which increases power consumption of the network device.

In order to solve the above problems, the embodiments of the disclosure provide a data transmission method, which can be used in the above communication system.

With reference to the above communication system, by taking downlink data transmission as an example, FIG. 2 is a flowchart of implementing a data transmission method according to an embodiment of the disclosure. As illustrated in FIG. 2, the above data transmission method may include the following steps.

S201, a network device indicates a location of a non-anchor carrier in a frequency band to a terminal.

It should be understood that the network device may configure multiple carriers for a serving cell of the terminal, and these multiple carriers correspond to the same cell identifier, e.g., a physical cell ID (PCI). In the multiple carriers of the cell, one carrier is an anchor carrier (which may be referred to as a primary carrier) and other carriers are non-anchor carriers (which may be referred to as secondary carriers). Optionally, the serving cell may be referred to as a serving cell with multiple carriers.

In some possible implementations, the network device may configure a plurality of carriers for the serving cell of the terminal according to capability information of the terminal. For example, the terminal reports a maximum number N of carriers supported by itself to the network device through the capability information (e.g., UE-NR capability), and the network device may configure N carriers for the serving cell of the terminal.

The anchor carrier and the non-anchor carrier may be downlink carriers, or the anchor carrier and the non-anchor carrier may be uplink carriers.

In an embodiment, the network device may select a carrier to deploy the anchor carrier and send a primary synchronization signal (PSS), a secondary synchronization signal (SSS), or a physical broadcast channel (PBCH) on the anchor carrier. Optionally, the PSS, the SSS, and the PRBCH form a synchronization signal and PBCH block (SSB).

The network device selects at least one carrier to deploy the non-anchor carrier. At this time, the network device can also send the PSS, the SSS, or the PBCH on the non-anchor carrier. Certainly, the PSS, SSS, and PBCH may not be sent on the non-anchor carrier, which is not limited in the embodiments of the disclosure.

In an embodiment, the network device may also send a physical downlink share channel (PDSCH), a physical downlink control channel (PDCCH), or a physical random access channel (PRACH) on the anchor carrier. The PRACH may be sent on the non-anchor carrier, without sending the PDSCH and the PDCCH, which is not limited in the embodiments of the disclosure.

For example, FIG. 3 is a schematic diagram of an anchor carrier and non-anchor carriers according to an embodiment of the disclosure. As illustrated in FIG. 3, the network device configures 3 carriers for Cell A. Carrier 1 is a deployed anchor carrier, Carrier 2 is a deployed non-anchor carrier, and Carrier 3 is another deployed non-anchor carrier. an SSB1, system information (SI), a paging message, and a PRACH may be transmitted on Carrier 1. A PRACH may be transmitted on Carrier 2, and a PRACH may be transmitted on Carrier 3. Optionally, Carrier 2 may also be used to transmit an SSB2 for synchronization, and Carrier 3 may be used to transmit an SSB3.

It should be noted that the anchor carrier and the non-anchor carrier described above may be NR carriers. Optionally, the anchor carrier and the non-anchor carrier may be intra-band carriers or inter-band carriers.

In an embodiment, in order to reduce power consumption, a central frequency of the anchor carrier may be less than a central frequency of the non-anchor carrier. That is, the central frequency F_{DL1} of the non-anchor carrier satisfies: F_{DL1} > F_{DL2}, in which F_{DL2} is the central frequency of the anchor carrier. For example, the anchor carrier can be the FR1 carrier and the non-anchor carrier can be the FR2 carrier. When the terminal is in the idle state, it can reside on the FR1 carrier (i.e., the anchor carrier) to perform monitoring. When the service arrives, the terminal initiates random access to the FR2 carrier (i.e., the non-anchor carrier) and returns to the FR2 carrier for data transmission.

In the embodiments of the disclosure, through S201, the network device may indicate the location of the non-anchor carrier in the frequency band (or configuration information of the anchor carrier, such as the central frequency and a carrier bandwidth of the non-anchor carrier) to the terminal by transmitting indication information or a radio resource control (RRC) signaling on the anchor carrier.

In some possible embodiments, in addition to indicating the location of the non-anchor carrier in the frequency band, the network device may also indicate downlink configuration information, uplink configuration information, or reference signal configuration information of the anchor carrier and/or the non-anchor carrier.

S202, the terminal determines the location of the non-anchor carrier in the frequency band.

It should be understood that the terminal may determine the location of the non-anchor carrier in the frequency band according to the indication of the network device in S201.

S203, the terminal and the network device perform data transmission on the non-anchor carrier.

It should be understood that the terminal may perform data transmission with the network device on the non-anchor carrier after determining the location of the non-anchor carrier in the frequency band through S202. For example, the terminal receives data sent by the network device on the non-anchor carrier, the terminal sends data to the network device on the non-anchor carrier, the network device sends data to the terminal on the non-anchor carrier, and/or the network device receives data sent by the terminal on the non-anchor carrier.

In the embodiments of the disclosure, for a frequency division duplex (FDD) NR system, the uplink carrier and the downlink carrier may be carriers of different frequencies, thus, the terminal determines a downlink non-anchor carrier through S202, and the network device sends downlink data on the downlink anchor carrier in S203. At this time, the downlink data can include random access information, downlink user data, and the like. For a time division duplex (TDD) NR system, the uplink carrier and the downlink carrier are the same carrier, thus, in S203, the terminal can send uplink data on the non-anchor carrier determined in S202, for example, sending the random access information. The network device may send the downlink data, such as a paging message, the downlink user data, and the like, on the non-anchor carrier determined by the terminal in S202 by time division.

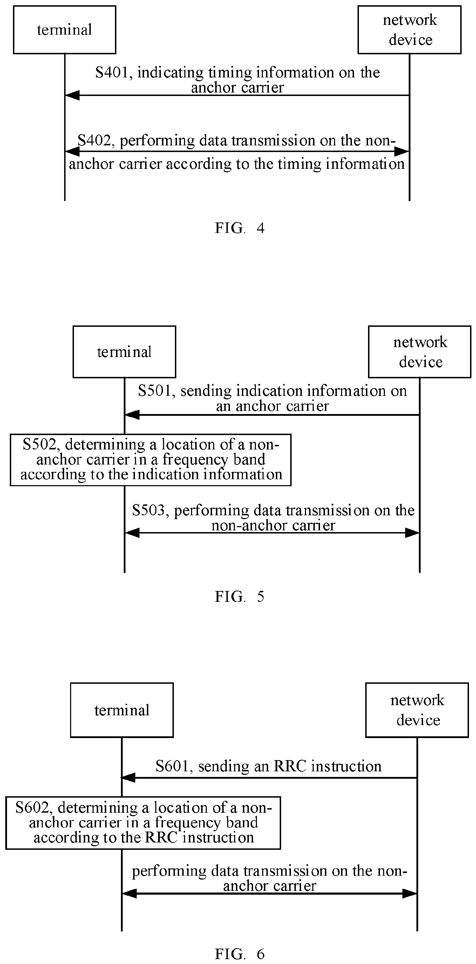

In some possible implementations, FIG. 4 is a flowchart of implementing a data transmission method according to an embodiment of the disclosure. As illustrated in FIG. 4, in order to reduce signaling interactions in the system and further reduce the power consumption, before S203, the above data transmission method may further includes the following steps.

S401, the network device indicates timing information to the terminal on the anchor carrier.

The above timing information is configured to indicate a timing mapping relation between the non-anchor carrier and the anchor carrier. For example, the timing information may include a system frame number (SFN) offset, a frame boundary offset, and a slot boundary offset. Certainly, the timing information may also include other information for indicating the timing mapping relation between the non-anchor carrier and the anchor carrier, which is not specifically limited in the embodiments of the disclosure.

In practical application, the network device may carry the timing information on the SI, or may carry the timing information on an RRC signaling.

In an embodiment, if the non-anchor carrier does not carry the SSB, the network device may indicate the timing information to the terminal through S401, to complete synchronization between the anchor carrier and the non-anchor carrier according to the timing information.

The above S203 may include S402, in which the terminal and the network device perform the data transmission on the non-anchor carrier according to the timing information.

In another possible implementation, in order to monitor the plurality of carriers configured for the serving cell and realize mobility management, after S202, the terminal may perform radio resource management (RRM) measurement, radio link monitoring (RLM) measurement, beam management measurement on the non-anchor carrier, and the like.

In the embodiments of the disclosure, the network device configures a plurality of carriers for the serving cell of the terminal, to increase the capacity of the serving cell. If the anchor carrier is the FR1 carrier and the non-anchor carrier is the FR2 carrier, the terminal may reside in the FR1 carrier when it is in the idle state, and when the service arrives, the terminal initiates random access to the FR2 carrier and returns to the FR2 carrier for data transmission. In this way, the power consumption is reduced and resources are saved.

FIG. 5 is a flowchart of implementing a data transmission method according to an embodiment of the disclosure. As illustrated in FIG. 5, the network device may indicate a location of a non-anchor carrier in the frequency band through indication information on an anchor carrier, and the data transmission method includes the following steps.

S501, the network device sends indication information to the terminal on an anchor carrier.

In some possible implementations, the network device may send the indication information to the terminal on the anchor carrier, to indicate the location of the non-anchor carrier (which may also be understood as indicating configuration information of the non-anchor carrier, such as a central frequency and a carrier bandwidth of the non-anchor carrier).

In an embodiment, a PBCH on the anchor carrier carries a master information block (MIB), and the above indication information may be carried in the MIB to indicate the location of the non-anchor carrier.

In another embodiment, a PDSCH and/or a PDCCH on the anchor carrier carries SI, and the above indication information may be carried in the SI to indicate the location of the non-anchor carrier.

In the embodiment of the disclosure, the above indication information may include: SSB configuration information (e.g., ssb-PositionsInBurst, ssb-PeriodicityServingCell, ss-PBCH-BlockPower, etc.), uplink and downlink configuration information (e.g., tdd-UL-DL-ConfigurationCommon), a timing advance (e.g., n-TimingAdvanceOffset), downlink configuration information (e.g., downlinkConfigCommon), and uplink configuration information (e.g., uplinkConfigCommon).

Certainly, the above indication information may be carried in other information on the anchor carrier, or carried on the anchor carrier alone, which is not specifically limited in the embodiments of the disclosure.

S502, the terminal determines the location of the non-anchor carrier in the frequency band according to the indication information.

It should be understood that the terminal receives the indication information sent by the network device on the anchor carrier and determines the location of the non-anchor carrier in the frequency band according to the indication information. Optionally, the terminal is in an idle state.

In an embodiment, the indication information is carried in the SI for indicating the location of the non-anchor carrier. S502 may be as following. The terminal may first blindly search for a PSS and a SSS. After obtaining the PSS and SSS, the terminal may receive an MIB on the anchor carrier. The terminal determines to receive the SI on the anchor carrier according to the indication in the MIB. According to the indication in the SI, the terminal determines the location of the non-anchor carrier in the frequency band.

In another embodiment, the indication information is carried in the SI for indicating the location of the non-anchor carrier. S502 may be as following. The terminal may first blindly search for the PSS and the SSS. After obtaining the PSS and SSS, the terminal may receive the MIB on the anchor carrier. The terminal determines the location of the non-anchor carrier in the frequency band according to the indication in the MIB.

S503, the terminal and the network device perform data transmission on the non-anchor carrier.

It should be understood that the terminal may perform data transmission with the network device on the non-anchor carrier after determining the location of the non-anchor carrier in the frequency band through S502. For example, the terminal receives data sent by the network device on the non-anchor carrier, the terminal sends data to the network device on the non-anchor carrier, the network device sends data to the terminal on the non-anchor carrier, and/or the network device receives data sent by the terminal on the non-anchor carrier.

In the embodiments of the disclosure, for an FDD NR system, an uplink carrier and a downlink carrier may be carriers of different frequencies, thus the downlink non-anchor carrier is determined by the terminal through S502, and the network device may send downlink data on the downlink anchor carrier in S503. At this time, the downlink data can include random access information and downlink user data, and the like. For a TDD NR system, the uplink carrier and the downlink carrier are the same carrier, thus, in S203, the terminal may send uplink data on the non-anchor carrier determined in S202, for example, sending the random access information. The network device may send the downlink data, such as a paging message, downlink user data and the like, on the non-anchor carrier determined by the terminal in S202 by time division.

In some possible implementations, the SI described above may carry timing information. The timing information is used to indicate a timing mapping relation between the non-anchor carrier and the anchor carrier. For example, the timing information may include an SFN offset, a frame boundary offset, and a slot boundary offset. Certainly, the timing information may further include other information for indicating the timing mapping relation between the non-anchor carrier and the anchor carrier, which is not specifically limited in the embodiments of the disclosure.

As illustrated in FIG. 4, before S503, the data transmission method further includes: S401, in which the network device indicates the timing information to the terminal on the anchor carrier.

In an embodiment, if the non-anchor carrier does not carry the SSB, the network device may indicate the timing information to the terminal through S401, to complete synchronization between the anchor carrier and the non-anchor carrier according to the timing information.

The above S503 may include: S402, in which the terminal and the network device perform data transmission on the non-anchor carrier according to the timing information.

In another possible implementation, in order to monitor the multiple carriers configured for the serving cell and realize mobility management, after S502, the terminal may perform RRM measurement, RLS measurement, beam management measurement and the like on the non-anchor carrier.

In the embodiments of the disclosure, the network device configures a plurality of carriers for the serving cell of the terminal, to increase a capacity of the serving cell. If the anchor carrier is a FR1 carrier and the non-anchor carrier is a FR2 carrier, the terminal may reside in the FR1 carrier when it is in the idle state, and when the service arrives, the terminal initiates random access to the FR2 carrier and returns to the FR2 carrier for data transmission. In this way, power consumption is reduced and resources are saved. Further, the network device indicates the non-anchor carrier to the terminal on the anchor carrier, so that the terminal can determine the location of the non-anchor carrier in the frequency band by monitoring the anchor carrier, thereby reducing system signaling interactions and reducing power consumption.

FIG. 6 is a flowchart of implementing a data transmission method according to an embodiment of the disclosure. As illustrated in FIG. 6, the network device may indicate a location of a non-anchor carrier in a frequency band via an RRC signaling, and the data transmission method described above may further include the following steps.

S601, the network device sends an RRC instruction to the terminal.

It should be understood that the RRC signaling may indicate the location of the non-anchor carrier in the frequency band (it may also be understood that the RRC signaling indicates configuration information of the non-anchor carrier, such as a central frequency and a carrier bandwidth of the non-anchor carrier).

In the embodiment of the disclosure, the RRC signaling may carry at least one of: SSB configuration information (e.g., ssb-PositionsInBurst, ssb-PeriodicityServingCell, ss-PBCH-BlockPower, etc.), uplink and downlink configuration information (e.g., tdd-UL-DL-ConfigurationCommon), a timing advance (e.g., n-TimingAdvanceOffset), downlink configuration information (e.g., downlinkConfigCommon), and uplink configuration information (e.g., uplinkConfigCommon).

S602, the terminal determines the location of the non-anchor carrier in the frequency band according to the RRC instruction.

It should be understood that the terminal receives the RRC signaling sent by the network device and determines the location of the non-anchor carrier in the frequency band according to the indication of the RRC signaling. Optionally, the terminal is in an inactive state or a connected state.

S603, the terminal and the network device performs data transmission on the non-anchor carrier.

It should be understood that the terminal may perform data transmission with the network device on the non-anchor carrier after determining the location of the non-anchor carrier in the frequency band through S02. For example, the terminal receives data sent by the network device on the non-anchor carrier, the terminal sends data to the network device on the non-anchor carrier, the network device sends data to the terminal on the non-anchor carrier, and/or the network device receives data sent by the terminal on the non-anchor carrier.

In the embodiment of the disclosure, for an FDD NR system, an uplink carrier and a downlink carrier may be carriers of different frequencies, thus, a downlink non-anchor carrier is determined by the terminal through S502, and the network device may send downlink data on the downlink anchor carrier in S503. At this time, the downlink data may include random access information, downlink user data and the like. For a TDD NR system, the uplink carrier and the downlink carrier are the same carrier, thus, in S203, the terminal may send uplink data, for example, sending the random access information, on the non-anchor carrier determined in S202. The network device may send the downlink data, such as a paging message, downlink user data and the like, on the non-anchor carrier determined by the terminal in S202 by time division.

In some possible implementations, the RRC signaling described above may carry timing information. The timing information is configured to indicate a timing mapping relation between the non-anchor carrier and the anchor carrier. For example, the timing information may include a SFN offset, a frame boundary offset, and a slot boundary offset. Certainly, the timing information may also include other information for indicating the timing mapping relation between the non-anchor carrier and the anchor carrier, which is not specifically limited in embodiments of the disclosure.

As illustrated in FIG. 4, before S603, the above data transmission method further includes: S401, in which the network device indicates timing information to the terminal on the anchor carrier.

In an embodiment, if the non-anchor carrier does not carry the SSB, the network device may indicate the timing information to the terminal through S401, to complete synchronization between the anchor carrier and the non-anchor carrier according to the timing information.

The above S603 may include: S402, in which the terminal and the network device perform data transmission on the non-anchor carrier according to the timing information.

In another possible implementation, in order to monitor the multiple carriers configured for the serving cell and realize mobility management, after S602, the terminal may perform RRM measurement, RLS measurement, and beam management measurement on the non-anchor carrier.

In the embodiment of the disclosure, the network device configures multiple carriers for the serving cell of the terminal, to increase the capacity of the serving cell. If the anchor carrier is a FR1 carrier and the non-anchor carrier is a FR2 carrier, the terminal may reside in the FR1 carrier when it is in the idle state, and when the service arrives, the terminal initiates random access to the FR2 carrier and returns to the FR2 carrier for data transmission. In this way, power consumption is reduced and resources are saved.

In some possible implementations, an implementation process of the data transmission method on the terminal side provided by the embodiment of the disclosure may include the following steps.

Step 11, the terminal determines a location of a non-anchor carrier of a serving cell in a frequency band.

Step 12, the terminal performs data transmission with the network device on the non-anchor carrier.

In some possible implementations, the anchor carrier is configured to transmit: a PSS, an SSS, a PBCH, a PDSCH, a paging message, a PDCCH, and the like.

In some possible implementations, step 12 may include following. The terminal performs random access, receives a paging message, or receives downlink data on the non-anchor carrier.

Optionally, the anchor carrier and the non-anchor carrier are NR carriers.

A central frequency of the anchor carrier is less than a central frequency of the non-anchor carrier.

It should be understood that specific implementation processes of steps 11 and 12 can be referred to the specific description of S202 and S203 in the embodiment of FIG. 2, and will not be repeated herein.

In some possible embodiments, the above data transmission method may further include following. Step 13, the terminal receives timing information on the anchor carrier. Step 14, the terminal performs data transmission on the non-anchor carrier according to the timing information.

It should be understood that specific implementation processes of step 13 and step 14 can be referred to the specific description of S401 and S402 in the embodiment of FIG. 4, and will not be repeated herein.

In some possible implementations, after step 11, the above data transmission method further includes that, the terminal performs RRM measurement, RLM measurement, beam management measurement, and the like on the non-anchor carrier.

Correspondingly, an implementation process of the data transmission method on the network device side provided by the embodiment of the disclosure may include the following steps.

Step 21, the network device indicates a location of a non-anchor carrier in a frequency band to a terminal.

Step 22, the network device performs data transmission with the terminal on the non-anchor carrier.

In some possible implementations, the anchor carrier is configured to transmit: a PSS, an SSS, a PBCH, a PDSCH, a paging message, a PDCCH, and the like.

In some possible implementations, the step 22 may include that, the terminal receives random access information, performs paging, or sends downlink data on the non-anchor carrier.

Optionally, the anchor carrier and the non-anchor carrier are NR carriers.

A central frequency of the anchor carrier is less than a central frequency of the non-anchor carrier.

It should be understood that implementation processes of steps 21 and 22 can be referred to the specific description of S201 and S203 in the embodiment of FIG. 2 and will not be repeated herein.

In some possible embodiments, the data transmission method described above may further include following. Step 23, the network device indicates timing information on the anchor carrier. Step 24, the network device performs data transmission on the non-anchor carrier according to the timing information.

It should be understood that specific implementation processes of step 23 and step 24 can be referred to the specific description of S401 and S402 in the embodiment of FIG. 4, and will not be repeated herein.

In some possible implementations, an implementation process of the data transmission method on the terminal side provided by the embodiments of the disclosure may include the following steps.

Step 31, the terminal determines a location of a non-anchor carrier in a frequency band according to indication information.

Step 32, the terminal performs data transmission with a network device on the non-anchor carrier.

In some possible implementations, the anchor carrier is configured to transmit: a PSS, an SSS, a PBCH, a PDSCH, a paging message, a PDCCH, and the like.

In some possible implementations, step 32 may include that, the terminal performs random access, receives a paging message, or receives downlink data on the non-anchor carrier.

Optionally, the anchor carrier and the non-anchor carrier are NR carriers.

A central frequency of the anchor carrier is less than a central frequency of the non-anchor carrier.

It should be understood that implementation processes of steps 31 and 32 can be referred to the specific description of S502 and S503 in the embodiment of FIG. 5 and will not be repeated herein.

In some possible implementations, the above data transmission method may further include following. Step 33, the terminal receives timing information on the anchor carrier. Step 34, the terminal performs data transmission on the non-anchor carrier according to the timing information.

It should be understood that implementation processes of steps 33 and 34 can be referred to the specific description of S401 and S402 in the embodiment of FIG. 4 and will not be repeated herein.

In some possible implementations, after step 31, the above data transmission method may further include that, the terminal performs RRM measurement, RLM measurement, beam management measurement and the like on the non-anchor carrier.

Correspondingly, an implementation process of the data transmission method on the network device side provided by the embodiment of the disclosure may include the following steps.

Step 41, the network device sends indication information to a terminal on an anchor carrier.

Step 42, the network device performs data transmission with the terminal on a non-anchor carrier.

In some possible implementations, the anchor carrier is configured to transmit: a PSS, an SSS, a PBCH, a PDSCH, a paging message, a PDCCH, and the like.

In some possible implementations, the step 42 may include following. The terminal receives random access information, performs paging, or sends downlink data on the non-anchor carrier.

Optionally, the anchor carrier and the non-anchor carrier are NR carriers.

A central frequency of the anchor carrier is less than a central frequency of the non-anchor carrier.

It should be understood that implementation processes of steps 41 and 42 can be referred to the specific description of S501 and S503 in the embodiment of FIG. 5 and will not be repeated herein.

In some possible implementations, the above data transmission method may further include following. Step 43, the network device indicates timing information on the anchor carrier. Step 44, the network device performs data transmission on the non-anchor carrier according to the timing information.

It should be understood that implementation processes of steps 43 and 44 can be referred to the specific description of S401 and S402 in the embodiment of FIG. 4 and will not be repeated herein.

In some possible implementations, an implementation process of the data transmission method on the terminal side provided by the embodiments of the disclosure may include the following steps.

Step 51, the terminal determines a location of a non-anchor carrier in a frequency band according to a RRC signaling.

Step 52, the terminal performs data transmission with a network device on the non-anchor carrier.

In some possible implementations, the anchor carrier is configured to transmit: a PSS, an SSS, a PBCH, a PDSCH, a paging message, a PDCCH, and the like.

In some possible implementations, the step 52 may include following. The terminal performs random access, receives a paging message, or receives downlink data on the non-anchor carrier.

Optionally, the anchor carrier and the non-anchor carrier are NR carriers.

A central frequency of the anchor carrier is less than a central frequency of the non-anchor carrier.

It should be understood that implementation processes of steps 51 and 52 can be referred to the specific description of S602 and S603 in the embodiment of FIG. 6 and will not be repeated herein.

In some possible implementations, the above data transmission method further includes following. Step 53, the terminal receives timing information on the anchor carrier. Step 54, the terminal performs data transmission on the non-anchor carrier according to the timing information.

It should be understood that implementation processes of steps 53 and 54 can be referred to the specific description of S401 and S402 in the embodiment of FIG. 4 and will not be repeated herein.

In some possible implementations, after step 51, in the above data transmission method may further include following. The terminal performs RRM measurement, RLM measurement, beam management measurement and the like on the non-anchor carrier.

Correspondingly, an implementation process of the data transmission method on the network device side provided by the embodiment of the disclosure may include the following steps.

Step 61, the network device sends a RRC instruction to a terminal.

Step 62, the network device performs data transmission with the terminal on the non-anchor carrier.

In some possible implementations, the anchor carrier is configured to transmit: a PSS, an SSS, a PBCH, a PDSCH, a paging message, a PDCCH, and the like.

In some possible implementations, the step 62 may include following. The terminal receives random access information, performs paging, or sends downlink data on the non-anchor carrier.

Optionally, the anchor carrier and the non-anchor carrier are NR carriers.

A central frequency of the anchor carrier is less than a central frequency of the non-anchor carrier.

It should be understood that implementation processes of steps 61 and 62 can be referred to the specific description of S601 and S603 in the embodiment of FIG. 6 and will not be repeated herein.

In some possible implementations, the above method further includes following. Step 63, the network device indicates timing information on the anchor carrier, and Step 64, the network device performs data transmission on the non-anchor carrier according to the timing information.

It should be understood that implementation processes of steps 63 and 64 can be referred to the specific description of S401 and S402 in the embodiment of FIG. 4 and will not be repeated herein.

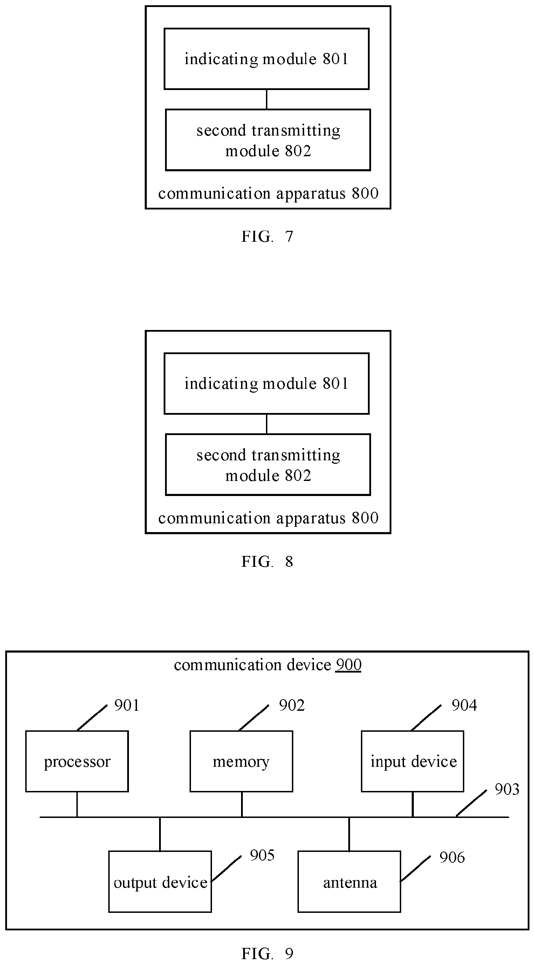

Based on the same inventive concept, the embodiments of the disclosure also provide a communication apparatus. The communication apparatus may be a terminal in a communication system, a chip or a chip system in the terminal, or a functional module in the terminal for realizing the method described in the above embodiments. The communication apparatus may realize functions performed by the terminal in each of the above-described embodiments, and these functions may be realized by using hardware to execute corresponding software. The hardware or software includes one or more modules corresponding to the above-described functions. FIG. 7 is a block diagram of a communication apparatus according to an embodiment of the disclosure. As illustrated in FIG. 7, the communication apparatus 700 includes: a determining module 701, configured to determine a location of a non-anchor carrier of a serving cell in a frequency band, in which the serving cell is configured with an anchor carrier and the non-anchor carrier; and a first transmitting module 702, configured to perform data transmission on the non-anchor carrier.

In some possible implementations, the first transmitting module is further configured to: receive indication information on the anchor carrier, in which the indication information is configured to indicate the location of the non-anchor carrier in the frequency band; or receive a RRC signaling, in which the RRC signaling is configured to indicate the location of the non-anchor carrier in the frequency band.

In some possible implementations, the indication information is carried by a MIB or SI.

In some possible implementations, the anchor carrier is configured to transmit at least one of: a PSS, an SSS, a PBCH, a PDSCH, a paging message, a PDCCH, and the like.

In some possible implementations, the first transmitting module is further configured to: before the determining module determines the location of the non-anchor carrier of the serving cell in the frequency band, send capacity information to a network device, in which the capacity information is configured to instruct the network device to configure the anchor carrier and the non-anchor carrier for the serving cell according to a maximum number of carriers supported by the terminal.

In some possible implementations, the first transmitting module is further configured to: receive timing information on the anchor carrier, in which the timing information is configured to indicate a timing mapping relation between the non-anchor carrier and the anchor carrier, and perform the data transmission on the non-anchor carrier according to the timing information.

In some possible implementations, the first transmitting module is configured to: perform random access, receive a paging message, or receive downlink data on the non-anchor carrier.

In some possible implementations, the first transmitting module is further configured to: perform RRM measurement, RLM measurement and/or beam management measurement on the non-anchor carrier.

In some possible implementations, the anchor carrier and the non-anchor carrier are NR carriers.

In some possible implementations, a central frequency of the anchor carrier is less than a central frequency of the non-anchor carrier.

It should be understood that an implementation process of the determining module 701 and the first transmitting module 702 can be referred to the specific description of embodiments of FIG. 2 to FIG. 6 and will not be repeated herein for the sake of brevity of the specification.

The first transmitting module 702 in the embodiments of the disclosure may be a transceiver interface, a transceiver circuit, or a transceiver. The determining module 701 may be one or more processors.

Based on the same inventive concept, the embodiments of the disclosure also provide a communication apparatus. The communication apparatus may be a network device in a communication system, a chip or a chip system in the network device, or a functional module in the network device for realizing the method described in the above embodiments. The communication apparatus may realize functions performed by the network device in each of the above-described embodiments, and these functions may be realized by using hardware to execute corresponding software. The hardware or software includes one or more modules corresponding to the above-described functions. FIG. 8 is a block diagram of a communication apparatus according to an embodiment of the disclosure. As illustrated in FIG. 8, the communication apparatus 800 includes: an indicating module 801, configured to indicate a location of a non-anchor carrier of a serving cell of a terminal in a frequency band, in which the serving cell is configured with an anchor carrier and the non-anchor carrier; and a second transmitting module 802, configured to perform data transmission on the non-anchor carrier.

In some possible implementations, the second transmitting module is configured to: send indication information to the terminal on the anchor carrier, in which the indication information is configured to indicate the location of the non-anchor carrier in the frequency band; or send a RRC signaling, in which the RRC signaling is configured to indicate the location of the non-anchor carrier in the frequency band.

In some possible implementations, the indication information is carried by a MIB or SI.

In some possible implementations, the anchor carrier is configured to transmit at least one of: a PSS, an SSS, a PBCH, a PDSCH, a paging message, a PDCCH, and the like.

In some possible implementations, the indicating module is further configured to: before indicating the location of the non-anchor carrier of the serving cell in the frequency band, configure the anchor carrier and the non-anchor carrier for the serving cell according to capacity information reported by the terminal, in which the capacity information is configured to indicate a maximum number of carriers supported by the terminal.

In some possible implementations, the indicating module is further configured to: indicate timing information on the anchor carrier, in which the timing information is configured to indicate a timing mapping relation between the non-anchor carrier and the anchor carrier. The second transmitting module is further configured to perform the data transmission on the non-anchor carrier according to the timing information.

In some possible implementations, the second transmitting module is further configured to: receive random access information, perform paging, or send downlink data on the non-anchor carrier.

In some possible implementations, the anchor carrier and the non-anchor carrier are NR carriers.

In some possible implementations, a central frequency of the anchor carrier is less than a central frequency of the non-anchor carrier.

It should be understood that an implementation process of the indicating module 801 and the second transmitting module 802 can be referred to the specific description of embodiments of FIG. 2 to FIG. 6 and will not be repeated herein for the sake of brevity of the specification.

The second transmitting module 802 in the embodiments of the disclosure may be a transceiver interface, a transceiver circuit, or a transceiver. The indicating module 801 may be one or more processors.

Based on the same inventive concept, the embodiments of the disclosure provide a communication device. The communication device may be the terminal or the network device as described in one or more of the above embodiments. FIG. 9 is a schematic diagram of a communication device according to an embodiment of the disclosure. As illustrated in FIG. 9, the communication device 900 adopts general-purpose computer hardware, and includes a processor 901, a memory 902, a bus 903, an input device 904, and an output device 905.

In some possible implementations, the memory 902 may include a computer storage medium in the form of volatile and/or non-volatile memory, such as a Read Only Memory (ROM) and/or a random access memory. The memory 902 may store operating systems, applications, other program modules, executable codes, program data, user data, and the like.

The input device 904 may be used to input instructions and information to the communication device. The input device 904 may be a keyboard or a pointing device, such as a mouse, trackballs, touchpads, microphones, joysticks, game pads, satellite television antennas, scanners, or other devices. These input devices may be connected to the processor 901 via the bus 903.

The output device 905 may be used for the communication device to output information. In addition to a monitor, the output device 905 may be other peripheral output devices, such as speakers and/or printing devices, which may also be connected to the processor 901 via the bus 903.

The communication device may be connected to the network, such as a local area network (LAN), via an antenna 906. In a networked environment, computer-executable instructions stored in a control device may be stored in a remote storage device, which is not limited to local storage.

When the processor 901 in the communication device executes the executable codes or application programs stored in the memory 902, the communication device executes the communication method on the terminal side or on the network device side in the above embodiments, and the specific execution process is described with reference to the above embodiments, and will not be repeated herein.

In addition, computer-executable instructions for realizing the functions of the determining module 701 and the first transmitting module 702 in FIG. 7 are stored in the above-described memory 902. The functions/implementation processes of the determining module 701 and the first transmitting module 702 in FIG. 7 can all be realized by the processor 901 in FIG. 9 through calling the computer-executable instructions stored in the memory 902, the specific realization processes and functions may refer to the above relevant embodiments.

Alternatively, computer-executable instructions for realizing the functions of the indicating module 801 and the second transmitting module 802 in FIG. 8 are stored in the above-described memory 902. The functions/implementation processes of the indicating module 801 and the second transmitting module 802 in FIG. 8 can both be realized by the processor 901 in FIG. 9 through calling the computer-executable instructions stored in the memory 902, the specific realization processes and functions may refer to the above relevant embodiments.

Based on the same inventive concept, the embodiments of the disclosure provide a terminal that is consistent with the terminal in one or more of the above embodiments. Optionally, the terminal may be a cellular phone, a computer, a digital broadcast terminal, a message transceiver device, a game console, a tablet device, a medical device, a fitness device, a personal digital assistant, and the like.

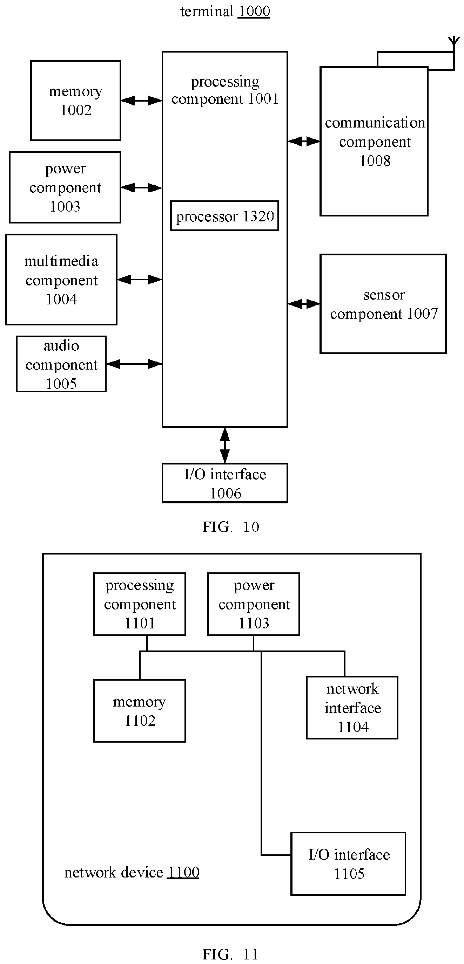

FIG. 10 is a schematic diagram of a terminal according to an embodiment of the disclosure. As illustrated in FIG. 10, the terminal 1000 may include one or more of the following components: a processing component 1001, a memory 1002, a power component 1003, a multimedia component 1004, an audio component 1005, an input/output (I/O) interface 1006, a sensor component 1007, and a communication component 1008.

The processing component 1001 typically controls overall operations of the terminal 1000, such as the operations associated with display, telephone call, data communication, a camera operation, and a recording operation. The processing component 1001 may include one or more processors 1310 to perform instructions to implement all or part of the steps in the above described methods. Moreover, the processing component 1001 may include one or more modules which facilitate the interaction between the processing component 1001 and other components. For example, the processing component 1001 may include a multimedia module to facilitate the interaction between the multimedia component 1004 and the processing component 1001.

The memory 1002 is configured to store various types of data to support the operation of the terminal 1000. Examples of such data include instructions for any application or method operated on the terminal 1000, contact data, phonebook data, messages, pictures, videos, etc. The memory 1002 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a ROM, a magnetic memory, a flash memory, a magnetic or optical disk.

The power component 1003 provides power to various components of the terminal 1000. The power component 1003 may include a power management system, one or more power sources, and any other components associated with the generation, management, and distribution of power in the terminal 1000.

The multimedia component 1004 includes a screen providing an output interface between the terminal 1000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1004 includes a front-facing camera and/or a rear-facing camera. When the terminal 1000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1005 is configured to output and/or input audio signals. For example, the audio component 1005 includes a microphone (MIC) configured to receive an external audio signal when the terminal 1000 is in an operation mode, such as a calling mode, a recording mode, and a voice recognition mode. The received audio signal may be further stored in the memory 1002 or transmitted via the communication component 1008. In some embodiments, the audio component 1005 further includes a speaker to output audio signals.

The I/O interface 1006 provides an interface between the processing component 1001 and peripheral interface modules, such as a keyboard, a click wheel, buttons, and the like. The buttons may include, but are not limited to, a home button, a volume button, a starting button, and a locking button.

The sensor component 1007 includes one or more sensors to provide status assessments of various aspects of the terminal 1000. For instance, the sensor component 1007 may detect an open/closed status of the terminal 1000, relative positioning of components, e.g., the display and the keypad, of the terminal 1000, a change in position of the terminal 1000 or a component of the terminal 1000, a presence or absence of a user contact with the terminal 1000, an orientation or an acceleration/deceleration of the terminal 1000, and a change in temperature of the terminal 1000. The sensor component 1007 may include a proximity sensor configured to detect the presence of nearby objects without any physical contact. The sensor component 1007 may also include a light sensor, such as a Complementary Metal Oxide Semiconductor (CMOS) or Charge-Coupled Device (CCD) image sensor, for use in imaging applications. In some embodiments, the sensor component 1007 may also include an accelerometer sensor, a gyroscope sensor, a magnetic sensor, a pressure sensor, or a temperature sensor.

The communication component 1008 is configured to facilitate communication, wired or wirelessly, between the terminal 1000 and other devices. The terminal 1000 can access a wireless network based on a communication standard, such as Wi-Fi, 2G or 3G, or a combination thereof. In an exemplary embodiment, the communication component 1008 receives a broadcast signal from an external broadcast management system or broadcast associated information via a broadcast channel. In an exemplary embodiment, the communication component 1008 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the terminal 1000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

Based on the same inventive concept, the embodiments of the disclosure provide a network device that is consistent with the network device in one or more of the above embodiments.

FIG. 11 is a schematic diagram of a network device according to an embodiment of the disclosure. As illustrated in FIG. 11, the network device 1100 may include a processing component 1101 which further includes one or more processors, and memory resources represented by a memory 1102 for storing instructions that can be executed by the processing component 1101, such as applications. The application programs stored in the memory 1102 may include one or more modules each corresponding to a set of instructions. In addition, the processing component 1101 is configured to execute the instructions to perform any of the methods performed by the network device A as described above.

The network device 1100 may include a power component 1103 configured to perform power management of the network device 1100, a wired or wireless network interface 1104 configured to connect the network device 1100 to a network, and an I/O interface 1105. The network device 1100 may operate on an operating system stored in the memory 1102, such as Windows Server^{™}, Mac OS X^{™}, Unix^{™}, Linux^{™}, FreeBSD^{™}, or the like.

Based on the same inventive concept, the embodiments of the disclosure also provide a computer-readable storage medium having instructions stored thereon. When the instructions are executed by a computer, the communication method performed by the terminal or the network device A in one or more of the above embodiments is performed.

Based on the same inventive concept, the embodiments of the disclosure also provide a computer program or a computer program product. When the computer program product is executed by a computer, the computer is caused to perform the communication method performed by the terminal or the network device A in one or more of the above embodiments.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A data transmission method, comprising:
determining, by a terminal, a location of a non-anchor carrier of a serving cell in a frequency band, wherein the serving cell is configured with an anchor carrier and the non-anchor carrier; and
performing data transmission on the non-anchor carrier by the terminal.

2. The method of claim 1, wherein determining the location of the non-anchor carrier of the serving cell in the frequency band by a terminal comprises:
receiving indication information on the anchor carrier by the terminal, wherein the indication information is configured to indicate the location of the non-anchor carrier in the frequency band; or
receiving a radio resource control (RRC) signaling by the terminal, wherein the RRC signaling is configured to indicate the location of the non-anchor carrier in the frequency band.

3. The method of claim 2, wherein the indication information is carried by a master information block (MIB) or system information (SI).

4. The method of claim 1, wherein the anchor carrier is configured to transmit at least one of: a primary synchronization signal, a secondary synchronization signal, a physical broadcast channel, a physical downlink shared channel, a paging message, or a physical downlink control channel.

5. The method of claim 1, before determining the location of the non-anchor carrier of the serving cell in the frequency band by the terminal, further comprising:
sending capacity information to a network device by the terminal, wherein the capacity information is configured to instruct the network device to configure the anchor carrier and the non-anchor carrier for the serving cell according to a maximum number of carriers supported by the terminal.

6. The method of claim 1, further comprising:
receiving timing information on the anchor carrier by the terminal, wherein the timing information is configured to indicate a timing mapping relation between the non-anchor carrier and the anchor carrier;
wherein performing the data transmission on the non-anchor carrier by the terminal comprises:
performing the data transmission on the non-anchor carrier according to the timing information by the terminal.

7. The method of claim 1, wherein performing the data transmission on the non-anchor carrier by the terminal comprises:
performing, by the terminal, random access, receiving a paging message, or receiving downlink data on the non-anchor carrier.

8. The method of claim 1, further comprising:
performing, by the terminal, radio resource management measurement, radio link monitoring measurement and/or beam management measurement on the non-anchor carrier.

9. The method of claim 1, wherein the anchor carrier and the non-anchor carrier are new radio (NR) carriers.

10. The method of claim 1, wherein a central frequency of the anchor carrier is less than a central frequency of the non-anchor carrier.

11. A data transmission method, comprising:
indicating, by a network device, a location of a non-anchor carrier of a serving cell of a terminal in a frequency band, wherein the serving cell is configured with an anchor carrier and the non-anchor carrier; and
performing, by the network device, data transmission on the non-anchor carrier.

12. The method of claim 11, wherein indicating the location of the non-anchor carrier of the serving cell of the terminal in the frequency band by the network device comprises:
sending, by the network device, indication information to the terminal on the anchor carrier, wherein the indication information is configured to indicate the location of the non-anchor carrier in the frequency band; or
sending, by the network device, a radio resource control (RRC) signaling, wherein the RRC signaling is configured to indicate the location of the non-anchor carrier in the frequency band.

13. The method of claim 12, wherein the indication information is carried by a master information block (MIB) or system information (SI).

14. The method of claim 11, wherein the anchor carrier is configured to transmit at least one of: a primary synchronization signal, a secondary synchronization signal, a physical broadcast channel, a physical downlink shared channel, a paging message, and a physical downlink control channel.

15. The method of claim 11, before indicating the location of the non-anchor carrier of the serving cell of the terminal in the frequency band by the network device, further comprising:
configuring, by the network device, the anchor carrier and the non-anchor carrier for the serving cell according to capacity information reported by the terminal, wherein the capacity information is configured to indicate a maximum number of carriers supported by the terminal.

16. The method of claim 11, further comprising:
indicating, by the network device, timing information on the anchor carrier, wherein the timing information is configured to indicate a timing mapping relation between the non-anchor carrier and the anchor carrier; and
wherein performing the data transmission on the non-anchor carrier by the network device comprises:
performing, by the network device, the data transmission on the non-anchor carrier according to the timing information.

17. The method of claim 11, wherein performing the data transmission on the non-anchor carrier by the network device comprises:
receiving, by the network device, random access information, performing paging, or sending downlink data on the non-anchor carrier.

18. The method of claim 11, wherein the anchor carrier and the non-anchor carrier are NR carriers.

19. The method of claim 11, wherein a central frequency of the anchor carrier is less than a central frequency of the non-anchor carrier.

20. A communication apparatus, comprising:
a determining module, configured to determine a location of a non-anchor carrier of a serving cell in a frequency band, wherein the serving cell is configured with an anchor carrier and the non-anchor carrier; and
a first transmitting module, configured to perform data transmission on the non-anchor carrier.

21. A communication apparatus, comprising:
an indicating module, configured to indicate a location of a non-anchor carrier of a serving cell of a terminal in a frequency band, wherein the serving cell is configured with an anchor carrier and the non-anchor carrier; and
a second transmitting module, configured to perform data transmission on the non-anchor carrier.

22. A communication device, comprising:
an antenna;
a memory; and
a processor, connected to the antenna and the memory respectively, and configured to control transmitting and receiving of the antenna by executing computer-executable instructions stored on the memory, and capable of performing the data transmission method of any one of claims 1-10 or claims 11-19.

23. A computer storage medium, a processing module, having computer-executable instructions stored thereon that, when executed by a processor, perform the data transmission method of any one of claims 1-10 or claims 11-19.
